# EUROPÄISCHE PATENTSCHRIFT

(11) **EP 0 990 628 B1**
(45) Veröffentlichungstag und Bekanntmachung des Hinweises auf die Patenterteilung: **24.04.2002**
(21) Anmeldenummer: 99117566.2
(22) Anmeldetag: 06.09.1999
(51) Int. Cl.: C04B 28/04

(54) **Leichtmauermörtel**
Lightweight masonry mortar
Mortier léger pour maçonnerie

(30) Priorität: 29.09.1998 DE 19844722
(43) Veröffentlichungstag der Anmeldung: 05.04.2000
(73) Patentinhaber: OTAVI MINEN AG, 65760 Eschborn (DE)
(72) Erfinder: Bock, Gunter Karl-Georg, Dr., 65599 Dornbusch-Wilsenroth (DE); Paul, Hans-Joachim Hermann, 97877 Wertheim (DE)
(74) Vertreter: Patentanwälte Dr. Solf & Zapf

(56) Entgegenhaltungen:
- EP-A- 0 652 187
- CH-A- 585 680
- DE-A- 19 540 273
- DE-B- 2 120 775
- FR-A- 2 391 177
- GB-A- 1 219 948
- CHEMICAL ABSTRACTS, vol. 111, no. 8, 21. August 1989 (1989-08-21) Columbus, Ohio, US; abstract no. 62907v, G. AKOPYAN, ET AL.: Seite 316; XP000063161 & SU 1 470 705 A (ID.)
- CHEMICAL ABSTRACTS, vol. 93, no. 10, 8. September 1980 (1980-09-08) Columbus, Ohio, US; abstract no. 100498g, H. TERADA: Seite 324; XP000183249 & JP 55 020283 A (ID.)

## Beschreibung

Die Erfindung betrifft einen Leichtmauermörtel, insbesondere in Form eines Werk-Trockenmörtels.

Gemäß der in Deutschland geltenden "Verordnung über einen energiesparenden Wärmeschutz bei Gebäuden" darf bei Gebäuden mit normalen Innentemperaturen der Wärmedurchgangskoeffizient der Außenwände maximal 0,50 W/(m²·K) betragen. Aufgrund dieser Verordnung haben bei Außenwandmauerwerken das Wärmeleitverhalten aller Komponenten des Wandaufbaus, insbesondere auch der Mörtelschichten zwischen den Mauersteinen eine Bedeutung bezüglich der Wärmeleitfähigkeit. Um einen möglichst hohen Wärmeschutz zu erreichen ist es einerseits möglich, die Wärmeleitfähigkeit des Mörtels zu verringern, andererseits kann die Mörtelfuge dünner ausgebildet werden, so daß ein verringerter Wärmeleitquerschnitt der Fuge erreicht wird. So ist es beispielsweise bekannt, Porenbetonsteine mit sogenannten Dünnbettmörteln, also Mörteln, die mit einer sehr dünnen Schicht auf das Mauerwerk aufgetragen werden, quasi zu verkleben. Bei dickeren Mörtelfugen ist es bekannt, zur Verringerung der Wärmeleitfähigkeit sogenannte Leichtmauermörtel zu entwickeln, welche eine verringerte Wärmeleitfähigkeit aufweisen, wobei unter anderem wärmedämmende Zuschlagstoffe verwendet werden. Dies sind insbesondere Zuschlagstoffe, die eine geringe Dichte und ein hohes Volumen, also eine große Porosität aufweisen. Verwendung finden insbesondere organische Schaumkügelchen (Polystyrolkugeln) sowie Schaumglasgranulat. Es ist bekannt, Leichtmauermörtel in Klassen einzuteilen. Nach DIN 1053 Teil 1 weist ein Leichtmauermörtel der Klasse LM 36 eine Wärmeleitfähigkeit ≤ 0,27 W/(m²·K) auf. Die maximale Trockenrohdichte eines derartigen Mörtels ist mit 1,0 kg/dm³ festgelegt. Ein Mörtel, der diese Spezifizierung erfüllt, gilt als normgerecht. Die DIN 1053 Teil 1 klassifiziert ferner einen Leichtmauermörtel der Klasse LM 21, dessen maximale Wärmeleitfähigkeit bei 0,18 W/ (m²·K) liegen darf. Die zugehörige entsprechende Trockenrohdichte beträgt 0,7 kg/dm³. Ein derartiger Leichtmauermörtel der Klasse LM 21 ist aus der DE 295 05 781 U1 bekannt, wobei als Zuschlag ausschließlich ein feinporiges Rundgranulat aus Glas verwendet wird. Ferner ist ein Zusatzmittel vorgesehen, welches aus einem Stabilisator, einem Schaumbildner und einem Verzögerer besteht. Das Mischungsverhältnis aus Zement, Zuschlagstoff und Zusatzmittel soll 1 : 3,5 : 2,5 betragen. In der genannten Druckschrift ist angegeben, daß dieser Leichtmauermörtel im Werk fertig anzumischen ist und anschließend zur Baustelle befördert werden soll, es handelt sich also um einen Werkfrischmörtel.

Aus der DE 195 40 273 A1 ist ein pumpfähiger Leichtmauermörtel der Klasse LM 21 bekannt, welcher als Werktrockenmörtel ausgeführt ist. Unter Werktrockenmörteln werden Mörtelmischungen verstanden, welche in einem Mörtelwerk trocken angemischt werden. Die fertige, trocken angemischte Mörtelmischung wird an der Baustelle lediglich noch nach Anweisung des Herstellers mit Wasser vermischt und ist dann verarbeitungsfähig. Ein Vorteil von Werktrockenmischungen ist, daß der Transport durch die Gewichtsminimierung gegenüber einem Fertigmörtel verbilligt wird.

Die DE 195 40 273 A1 schlägt einen derartigen Leichtmauermörtel der Klasse LM 21 mit der folgenden Zusammensetzung vor:

| | |
|---|---|
| Zement | 40 - 80 M-% |
| Kalkhydrat | 5 - 20 M-% |
| Schaumglasgranulat | 10 - 50 M-% |
| Celluloseether | 0,1 - 0,5 M-% |
| Luftporenbildner | 0,01 - 0,05 M-% |

Das Kalkhydrat hat gemäß dieser Druckschrift die Aufgabe, zum einen als hydraulisches Bindemittel zu dienen und zum anderen eine Gleit- und Wassertransportfunktion zu übernehmen. Als Schaumglasgranulat wird ein geschlossenporiges Granulat mit 0,5mm bis 4mm, insbesondere bis 2mm Durchmesser vorgeschlagen. Der Celluloseether dient, wie in der Bindemittelindustrie üblich, zum Einstellen der Viskosität (Verdickungsmittel) und zusätzlich als Wasserretentionsmittel. Der Luftporenbildner ist in der Lage einen derartigen Mörtel noch poröser und damit noch leichter und wärmedämmender auszubilden. Es wurde festgestellt, daß bei Leichtmauermörteln, welche mit einem geschlossenporigen Schaumglasgranulat als Leichtzuschlagstoff versehen sind, unter bestimmten Umständen Entmischungen stattfinden können, das heißt, daß der fertig abgebundene Mörtel bezüglich der Verteilung des Schaumglasgranulats aber auch der Luftporen inhomogen ist.

Als weiteren Bestandteil schlägt diese Druckschrift Perlite vor, wobei diese jedoch lediglich in der Zugabemenge spezifiziert werden.

Aus der DE 44 43 907 C2 ist ein Leichtmauermörtel bekannt, welcher sowohl eine verbesserte Wärme- als auch Schalldämmung eines Mauerwerks ermöglichen soll. Hierfür sieht diese Druckschrift vor, zu einem Dünnbettmörtel geblähtes Naturglas (Perlit) in Körnungen von 0 bis 3 bzw. 0 bis 2 mm zuzufügen. Ein derartig ausgebildeter Mörtel soll in einer Schichtdicke von 5 bis 10 mm aufgebracht und anschließend auf 1 bis 2 mm zusammengedrückt werden, wobei der Perlit, welcher eine zerbrechliche oder zusammendrückbare räumliche Struktur aufweisen soll, zerdrückt wird. In den Lochbereichen des Ziegels soll der Perlit jedoch in seiner ursprünglichen Struktur erhalten bleiben. Hierbei ist nachteilig, daß durch das Zerdrücken des Perlit im Bereich der Stege der Ziegel Wärmebrücken gebildet werden.

Aus der DE 44 43 594 A1 ist ein Putz oder Estrich bekannt, welcher einen wärmedämmenden Zuschlag enthalten soll. Diese Druckschrift schlägt vor, den Leichtzuschlagstoff als sogenanntes Einkornhaufwerk, das heißt mit einer sehr engen Durchmesserklassierung einzusetzen. Hierdurch sollen die Zwickel zwischen den Körnern unausgefüllt bleiben und die Körner lediglich in den Stoßbereichen zu den benachbarten Körnern mit Zementleim aneinander gebunden werden. Als Leichtzuschläge können insbesondere organische oder anorganische Leichtzuschläge, wie Schaumglas, Perlit, Vermiculit oder Polystyrol, Korkgranulat oder andere künstliche oder natürliche Materialien geblähter oder poröser Struktur verwendet werden. Eine derartige Mischung kann 58 bis 99 % Portlandzement, bis 15 % Kalkhydrat, bis 15 % Füller, bis .20 % Haftvermittler, und Wasserrückhaltemittel und Schaumbildner sowie Verdicker enthalten, darüber hinaus können in geringem Umfang Fasern zugegeben sein. Bei der Verwendung von Einkornhaufwerken ist von Nachteil, daß auch hier während des Mischvorgangs Inhomogenitäten auftreten können und sich Wasser und/oder Zementleim von dem Haufwerk absetzen.

Aus der DE 26 24 950 B2 ist ein Leichtbeton bekannt. Dieser Leichtbeton soll aus Zement, wasserdichten, elastischen Kunststoffpartikeln sowie anorganischen geschäumten Partikeln ausgebildet sein. Die Kunststoffpartikel können aus geschäumten Kunststoffen wie Polystyrol ausgebildet sein und weisen eine Körnung über 8 mm, vorzugsweise 10 bis 15 mm im Durchmesser auf. Als Blähsilikate sollen saugfähige Blähsilikate wie Bims, Blähton oder Perlit in einer Körnung von 0 bis 8 mm eingesetzt werden, wobei das Verhältnis derart bemessen sein soll, daß die Menge des tragenden Raumgitterwerkmaterials aus Zement und der Blähsilikatfraktion größer ist als diejenige, die zur satten Ausfüllung des Haufwerkporenraums der geschäumten Kunststoffperlen notwendig ist. Bei einer derartigen Mischung ist das Schüttgewichtsverhältnis von Zementleim zu Blähsilikaten und zu Schaumstoffperlen so extrem, daß Sedimentationen und Aufschwimmen nur dadurch unterbunden werden können, daß amorphe hydrophile Kieselsäure in Verbindung mit hochviskosen Cellulosederivaten notwendig ist.

Hierbei ist von großem Nachteil, daß ein derartiger Leichtbeton in der Herstellung sehr empfindlich bezüglich des Mischens ist und zum anderen durch den hohen Anteil von sehr großen Schaumstoffpartikeln ein optimales Druckfestigkeits/Wärmedämmvermögen-Verhältnis gegeben ist.

Aus der DE-B 21 20 775 ist ein Konstruktionsleichtbeton bekannt, der als Zuschlagstoff stark saugfähige, verschäumte, anorganische, betonverträgliche Produkte mit glatter, nicht gebrochener Oberfläche annähernd kugel- oder ellipsoidförmiger Gestalt in Korngrößen von 0,1 bis 6 mm, vorzugsweise 0,1 bis 4,0 mm, und mit Schüttdichten von 0,15 ± 0,10 kg/dm³, und als Leichtzuschlagstoff sehr harte, wenig saugfähige, verschäumte oder geblähte oder auf andere Weise porig gemachte, anorganische Stoffe in Korngrößen von 4 bis 25 mm und Schüttgewichten von 0,6 ± 0,2 kg/dm³, sowie eine ausreichende Menge von Zement und Wasser enthält. Als Leichtzuschlagstoff ist Perlit, wegen der gebrochenen Oberfläche ausgeschlossen. Der Zuschlagstoff besteht aus einer Mischung von Schaumglasgranulat und Blähtongranulat.

Aufgabe der Erfindung ist es, eine Werktrockenmischung für einen Leichtmauermörtel zur Verfügung zu stellen, wobei der erhärtete Mörtel einer Druckfestigkeit der Mörtelklasse LM 21 genügt, jedoch ein erheblich verbessertes Wärmedämmvermögen aufweist, so daß das Wärmedämmvermögen der Mörtelfuge an das Wärmedämmvermögen des vermauerten Steines optimal angepaßt ist.

Die Aufgabe wird mit einem Leichtmauermörtel mit den Merkmalen des Anspruch 1 gelöst, vorteilhafte Weiterbildungen sind in Unteransprüchen gekennzeichnet.

Erfindungsgemäß weist der aus der Trockenmischung hergestellte Leichtmauermörtel eine erheblich niedrigere Trockenrohdichte als vergleichbare Leichtmauermörtel auf, wobei die von der DIN 1053 geforderten Festigkeitswerte für LM 21 (> 7 N/mm²) erfüllt werden. Mit dem erfindungsgemäßen Leichtmauermörtel ist es möglich, die Wärmeleitfähigkeiten bzw. die Wärmedämmvermögen eines LM 18 bzw. sogar LM 15 zu erreichen. Dies wird erfindungsgemäß dadurch erreicht, daß als Zuschlag eine Kombination von Blähglas mit einem speziell ausgewählten expandierten Perlit zusammen mit hydraulischen Bindemitteln und Zusatzstoffen bzw. Zusatzmitteln verwendet wird. Es wurde herausgefunden, daß sich diese überraschenden und eigentlich widersprechenden Eigenschaften des Leichtmörtels - hohe Festigkeit bei niedriger Rohdichte - nur in einem sehr engen Verhältnis der Mischungsverhältnisse zu Perlit und Blähglas bei bestimmten Eigenschaften des Perlit ergibt. Insbesondere werden die herausragenden Eigenschaften bei einem Mischungsverhältnis von Perlit zu Blähglas von 1,7 : 1 bis 2,43 : 1 erreicht, wobei ein Perlit der Körnung 0 bis 2 mm und einer Schüttdichte von 45 bis 85 kg/m³ sowie Blähglas der Körnung 2 bis 4 mm und Schüttdichten von 170 bis 220 kg/m³ verwendet werden sollte. Erfindungsgemäß wird ein Mörtelgefüge erreicht, bei dem das Blähglas als Stützkorn gleichmäßig in der Bindemittelmatrix verteilt ist und ein Gefüge bzw. eine räumliche Anordnung von sich gegeneinander bzw. aufeinander abstützenden Körnern (Stützkorngefüge) ausbildet. Es wird vermutet, daß dieses Gefüge unter anderem für die hohe Festigkeit verantwortlich ist. Die Bindemittelmatrix wird aus dem Bindemittelanteil und der Perlitkörnung ausgebildet, welche gleichmäßig in den Zwickeln zwischen dem Blähglas eingelagert ist. In diesen Bereichen sind auch Luftporen durch Luftporenbildner angesiedelt, wobei der Mörtel im Vergleich zu bekannten Leichtmauermörteln erfindungsgemäß einen besonders geringen Anteil an Luftporen aufweist. Die für die Erzielung der geringen Trockenrohdichte notwendige Porosität wird hauptsächlich durch die Porengehalte der Leichtzuschlagstoffe erreicht, wobei insbesondere die feinen, üblicherweise durch Luftporenbildner eingebrachten Poren durch den speziell ausgewählten Perlit niedriger Schüttdichte eingebracht werden.

Es konnte festgestellt werden, daß die so erhaltene Porosität erheblich homogener verteilt ist, als eine durch Luftporenbildner erzeugte Porosität, wobei auch das Verhalten der Masse während des Mischens erheblich unkritischer bezüglich Entmischungen ist. Des weiteren läßt sich durch die Anordnung der Poren durch den Perlit die Porosität sowie die Porenverteilung und damit die Eigenschaften des Leichtmauermörtels vorhersehbar und exakt reproduzierbar erreichen, wobei durch die Senkung des Luftporengehalts eine weitergehende Steigerung der Festigkeit erreicht wurde. Dies wird darauf zurückgeführt, daß der Zementleim im Gegensatz zu bekannten Leichtmauermörteln aufgrund einer niedrigeren Porosität eine höhere Festigkeit ausbildet.

Die Erhöhung der Festigkeit wird auch auf den speziell ausgebildeten Perlit zurückgeführt, der vermutlich den Zementleim erheblich besser annimmt und bindet als das relativ glatte Blähglas und den Zementleim über die gesamte Masse gleichmäßig verteilt hält und zudem den Zementleim an die Blähglaskörner heranbringt und dort bis zum Abbinden hält. Dies wird vermutlich dadurch erreicht, daß der speziell ausgewählte Perlit eine besondere Verteilung von Wasserporen (von außen zugängliche Poren) und Luftporen (geschlossenen Poren) aufweist. Dieses spezielle ausgewogene Verhältnis dieser beiden Porenarten zueinander erlaubt dem Perlit den Zementleim an seine Oberfläche heranzubinden, ohne zu viel Wasser in das Korn aufzusaugen und so ein zu hohes Gewicht zu erreichen. Ein weiterer Vorteil ist, daß die naturgemäß weiche Perlitkörnung durch die Zementhülle stabilisiert wird, was ebenfalls einen hohen Anteil an konstanten Poren und eine Steigerung der Druckfestigkeit garantiert.

Als insbesondere vorteilhaft hat es sich ergeben, die Zementleimmenge so zu bemessen, daß die Perlitkörner lediglich mit einem Zementmantel ausgebildet werden und die Anzahl der Perlitkörner so bemessen ist, daß die mit Zementleim ummantelten Perlitkörner die Zwickel zwischen den aneinander stoßenden Blähglaskugeln ausfüllen. Die Perlitkörner bilden hierdurch in ihren Berührungsbereichen Zementleimbrücken aus, während die Zwickel zwischen den Perlitkörnchen im wesentlichen frei bleiben, d.h. nicht mit Zementleim ausgefüllt sind. Zwischen den die Zwickel zwischen den Blähglaskugeln ausfüllenden Perlitkörnern und den Blähglaskugeln werden ebenfalls Zementleimbrücken ausgebildet.

Bei Festigkeitsversuchen wurde festgestellt, daß das Bruchverhalten eines erhärteten, erfindungsgemäßen Mörtels optimal ist, das heißt, daß der Bruch grundsätzlich durch das Zuschlagstoffhaufwerk verläuft und nicht entlang der Korngrenzen.

Im folgenden wird die Erfindung anhand einer Zeichnung beispielhaft erläutert. Die einzige Figur zeigt einen schematischen Schnitt durch einen erhärteten erfindungsgemäßen Leichtmauermörtel.

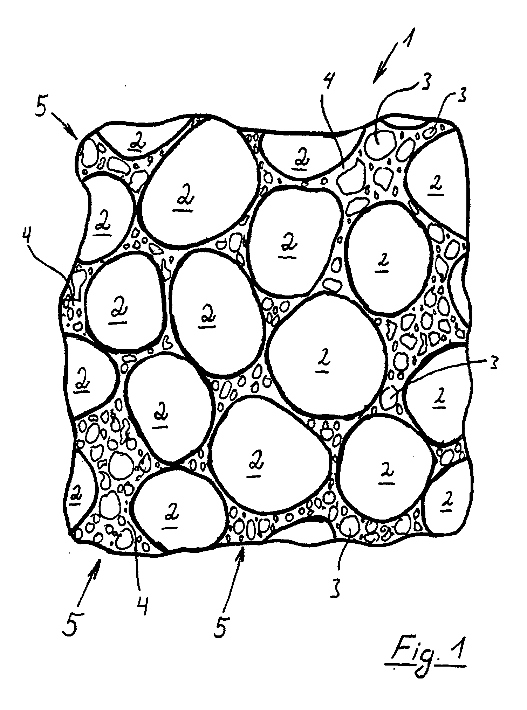

Ein gehärteter, erfindungsgemäßer Leichtmauermörtel 1 weist als einen wesentlichen Bestandteil Blähglaspartikel 2 einer Körnung von 2 bis 4 mm auf, welche im Gefüge mit benachbarten Blähglaspartikeln 2 sich gegenseitig berührend angeordnet sind. Hierdurch wird eine dreidimensionale Anordnung von sich gegenseitig abstützenden Blähglaspartikeln 2 ausgebildet. In den Zwickeln bzw. den Freiräumen zwischen den Blähglaspartikeln 2 sind Perlitkörner 3 angeordnet bzw. werden die Freiräume zwischen den Blähglaspartikeln 2 von Perlitkörnern ausgefüllt. Um die Perlitkörner 3 herum ist ein die Perlitkörner 3 einbettender Zementleim bzw. Zementstein 4 angeordnet. Der Zementleim 4 sowie die Perlitpartikel 3 bilden eine die Hohlräume zwischen den Blähglaskugeln 2 ausbildende Matrix 5 aus. Der Zementleim 4 kann wie in Fig. 1 dargestellt, den gesamten zwischen den Blähglaspartikeln 2 und Perlitkörnern 3 verbleibenden Raum ausfüllen. Erfindungsgemäß kann der Zementleim jedoch auch so bemessen sein, daß die Perlitkörner 3 mit einem Mantel (nicht gezeigt) aus Zementleim umgeben sind, wobei in den Berührungspunkten der Perlitkörner aneinander Zementleimbrücken ausgebildet werden und an den Berührungspunkten der Perlitkörner zu den Blähglaskugeln ebenfalls Zementleimbrücken ausgebildet werden.

Ein geeigneter Perlit ist ein Perlit mit einer Korngröße von 0 bis 2 mm mit einer Schüttdichte von 45 bis 85 kg/m³. Dieser Perlit weist bevorzugt eine Kornverteilung wie in der folgenden Tabelle auf

| | Schüttdichte | >2,0 mm | 1,6-2 mm | 1,0-1,6 mm | 0,5-1,0 mm | 0,25-0,5 mm | < 0,25 mm |
|---|---|---|---|---|---|---|---|
| | G/L | M- % | | | | | |
| Perlit 0-2 | 66 | 0 | 0,2 | 12,0 | 37,9 | 28,2 | 21,6 |
| | | | | | | | |

Diese spezielle Perlitkörnung weist ein ausgewogenes Verhältnis von Wasserporen (48 Vol.-%) und Luftporen (52 Vol.-%) auf. Wasserporen sind Poren, die aufgrund ihrer Zugänglichkeit von außen und ihrer Größe bzw. Länge in der Lage sind, durch Kapillarkräfte Wasser anzusaugen. Luftporen sind aufgrund ihres Durchmessers für Wasser von außen unzugängliche oder nach außen abgeschlossene Poren des Perlitkorns. Aufgrund der hohen Kapillarwirkung der Wasserporen wird nach dem Anmischen von diesen Poren schnell Wasser aufgesaugt, was wiederum bedeutet, daß der Zementleim außen an die Perlitkörnung angebunden wird. Nach der ersten Ausbildung der Hydratationsphasen des Zementes wird das naturgemäß wenig druckstabile Perlitkorn vorteilhafterweise von einer stabilisierenden Zementhülle umgeben.

Als Blähglas wird ein Blähglas mit Körngrößen von 2 bis 4 mm verwendet, welches eine Schüttdichte von 170 bis 220 kg/m³ aufweist. Dieses Blähglas weist vorzugsweise insbesondere eine Kornverteilung gemäß der folgenden Tabelle auf:

| | Schüttdichte | > 3,15 mm | >3,0 mm | > 2,8 mm | >2,5 mm | >2,24 mm | >2,0 mm | >1,25 mm |
|---|---|---|---|---|---|---|---|---|
| | G/L | M.-% | | | | | | |
| Blähglas 2-4 | 200 | 2,1 | 3,8 | 7,4 | 16,0 | 32,6 | 32,0 | 5,9 |
| | | | | | | | | |

Als besonders geeignet haben sich als Bindemittelkomponente Zemente der Festigkeitsklasse CEM I 42,5 und CEM I 52,5 erwiesen. Dem werden in geringen Mengen Luftporenbildner sowie Zelluloseether und/oder Stärkeether verwendet. Diese Zusatzmittel verbessern die Verarbeitbarkeit, d. h. sie sorgen für eine gleichmäßige homogene Verteilung der Luftporen und verbessern die Dispergierbarkeit, die Haftung sowie die Standfestigkeit und das Wasserrückhaltevermögen des Frischmörtels.

Die zuvor beschriebenen Komponenten werden werksseitig zu einer Werktrockenmischung gemischt.

Die folgende Tabelle stellt drei beispielhafte Trockenmörtelmischungen dar.

| Perlit: Blähglas (Volumen) | R.T | 1,7:1 | 2,14:1 | 2,43:1 |
|---|---|---|---|---|
| Perlit 0-2 mm | M.-% | 13,8 | 12,3 | 12,6 |
| Blähglas 2-4 mm | M.-% | 27,2 | 19,2 | 17,2 |
| Zement | M.-% | 59 | 68,5 | 70,2 |
| Luftporenbildner | M.-% | 0,0007 | 0,0005 | 0,0005 |
| Celluloseether | M.-% | 0,060 | 0,074 | 0,074 |
| | | | | |
| Schüttdichte (Tr. Mörtel) | G/L | 350 | 360 | 360 |
| Frischmö.Rohdichte | G/L | 830 | 870 | 890 |
| Luftporengehalt | Vol-% | 15-30 Vol-% | | |
| Wasser: Feststoff | | 0,7 | 0,73 | 0,75 |
| Wasser: Zement | | 1,19 | 1,07 | 1,07 |
| | | | | |
| Rohdichte 105 °C | G/L | 540 | 565 | 580 |
| Druckfestigkeit | N/mm² | 7,6 | 7,6 | 7,5 |
| | | | | |

Als generelle Rezeptur zur Herstellung eines erfindungsgemäßen Trockenmörtels kann eine Rezeptur mit den folgenden Grenzwerten angegeben werden:

| | |
|---|---|
| Perlit (0 bis 2 mm) | 11 - 15 Masse-% |
| Blähglas (2 bis 4 mm) | 15 - 30 Masse-% |
| Zement | 58 - 72 Masse-% |
| Luftporenbildner | < 0,0008 Masse-% |
| Zelluloseether | < 0,09 Masse-% |

Der Luftporengehalt eines aus einer derartigen Trockenmischung hergestellten Leichtmörtels liegt zwischen 15 und 30 Vol.-%, wobei eine Trockenrohdichte des Mörtels ≤ 600 kg/m³ erzielt wird.

Zusätzlich zu den genannten Komponenten können an sich bekannte und übliche Zusatzstoffe, wie Mittel zur Verbesserung der Verarbeitbarkeit, zur Wasserretention, zur Hydrophobierung sowie Erstarrungsverzögerer, Erhärtungsbeschleuniger, Haftvermittler und andere, zugesetzt werden.

Der verwendete Zement ist insbesondere ein Portlandzement, wobei der Leichtmauermörtel, neben den zuvor genannten Zusatzmitteln, insbesondere Fließmittel enthält.

Die erfindungsgemäße Trockenmörtelmischung kann insbesondere zur Herstellung eines Leichtmauernaßmörtels verwendet werden, der zum Vermauern von wärmedämmenden Steinen, insbesondere von Hohlblocksteinen aus Leichtbeton oder Vollblocksteinen und Vollsteinen aus Leichtbeton besteht. Ferner kann ein derartiger Leichtmauernaßmörtel, hergestellt aus der Trockenmörtelmischung, als Wärmedämmputz und zur Herstellung von Leichtbetonformteilen verwendet werden.

Bei dem erfindungsgemäßen Werktrockenmörtel ist von Vorteil, daß dieser an einer Baustelle lediglich noch mit Wasser angemischt werden muß und alsbald verarbeitbar ist, wobei durch die spezielle Mörtelzusammensetzung vorhersehbare und immer wieder reproduzierbare Ergebnisse bezüglich der Festigkeit und des Wärmedämmvermögens erreicht werden. Der erfindungsgemäße Mörtel weist eine sehr hohe Festigkeit bei zuvor nicht erreichbaren niedrigen Rohdichten auf, wobei diese Eigenschaften durch die Auswahl eines speziellen Perlits mit einer speziellen Perlitkörnung erreicht wird und die Komponenten des Trokkenmörtels derart aufeinander abgestimmt sind, daß die Blähglaskomponente ein Stützkorngefüge ausbildet. In vorteilhafter Weise wird die gute Verarbeitbarkeit bzw. werden die guten Frischmörteleigenschaften durch einen besonders geringen Anteil von Luftporenbildnern und damit von Luftporen erreicht, wobei der Mörtel bei der Verarbeitung auch wegen des speziell ausgebildeten, Wasser- und Zementleim ansaugenden Perlits, besonders unkritisch bezüglich Entmischungen und Inhomogenitäten ist.

## Patentansprüche

1. Trockenmörtelmischung zur Herstellung eines Leichtmauernaßmörtels im wesentlichen enthaltend Zement, Luftporenbildner sowie als ausgewählte Leichtzuschlagstoffe Perlit und Blähglas,
**dadurch gekennzeichnet,**
**daß** der Perlit eine Schüttdichte von 45 bis 85 kg/m³ und eine Korngröße von 0 bis 2 mm aufweist und das Blähglas eine Schüttdichte von 170 bis 220 kg/m³ und einer Korngröße von 2 bis 4 mm aufweist und 11 bis 15 M-% Perlit und 15 bis 30 M-% Blähglas bezogen auf die Gesamtmasse der Trockenmischung enthalten sind.

2. Trockenmörtelmischung nach Anspruch 1,
**dadurch gekennzeichnet,**
**daß** weniger als 0,0008 M-% Luftporenbildner enthalten sind.

3. Trockenmörtelmischung nach Anspruch 1 und/oder 2,
**dadurch gekennzeichnet,**
**daß** weniger als 0,09 M-% Celluloseether enthalten sind.

4. Trockenmörtelmischung nach einem der vorhergehenden Ansprüche,
**dadurch gekennzeichnet,**
**daß** 58 bis 72 M-% Zement enthalten sind.

5. Trockenmörtelmischung nach Anspruch 4,
**dadurch gekennzeichnet,**
**daß** der Zement ein Portlandzement ist.

6. Trockenmörtelmischung nach einem der vorhergehenden Ansprüche,
**dadurch gekennzeichnet,**
**daß** das Mischungsverhältnis Perlit zu Blähglas 1,7:1 bis 2,43:1 beträgt.

7. Trockenmörtelmischung nach einem der vorhergehenden Ansprüche,
**dadurch gekennzeichnet,**
**daß** der Perlit 48 Vol-% Wasserporen und 52 Vol-% Luftporen aufweist.

8. Trockenmörtelmischung nach einem der vorhergehenden Ansprüche,
**dadurch gekennzeichnet,**
**daß** der Leichtmauermörtel Mittel zur Verbesserung der Verarbeitbarkeit enthält.

9. Trockenmörtelmischung nach einem der vorhergehenden Ansprüche,
**dadurch gekennzeichnet,**
**daß** der Leichtmauermörtel Mittel zur Erhöhung der Wasserretention enthält.

10. Trockenmörtelmischung nach einem der vorhergehenden Ansprüche,
**dadurch gekennzeichnet,**
**daß** der Leichtmauermörtel Hydrophobierungsmittel enthält.

11. Trockenmörtelmischung nach einem der vorhergehenden Ansprüche,
**dadurch gekennzeichnet,**
**daß** der Leichtmauermörtel Erstarrungsverzögerer enthält.

12. Trockenmörtelmischung nach einem der vorhergehenden Ansprüche,
**dadurch gekennzeichnet,**
**daß** der Leichtmauermörtel Erhärtungsbeschleuniger enthält.

13. Trockenmörtelmischung nach einem der vorhergehenden Ansprüche,
**dadurch gekennzeichnet,**
**daß** der Leichtmauermörtel Fließmittel enthält.

14. Trockenmörtelmischung nach einem der vorhergehenden Ansprüche,
**dadurch gekennzeichnet,**
**daß** der Leichtmauermörtel Haftvermittler enthält.

15. Leichtmauerfestmörtel insbesondere unter Verwendung einer Trockenmörtelmischung nach einem der Ansprüche 1 bis 14 sowie Wasser, enthaltend erhärteten Zementstein, Luftporen sowie als ausgewählte Leichtzuschlagstoffe Perlit und Blähglas,
**dadurch gekennzeichnet,**
**daß** der Perlit eine Schüttdichte von 45 bis 85 kg/m³ und eine Korngröße von 0 bis 2 mm aufweist und das Blähglas eine Schüttdichte von 170 bis 220 kg/m³ und einer Korngröße von 2 bis 4 mm aufweist und 11 bis 15 M-% Perlit und 15 bis 30 M-% Blähglas bezogen auf die Gesamtmasse der Trockenmischung enthalten sind, wobei die Blähglaspartikel (2) eine dreidimensionale Anordnung von benachbarten, sich gegenseitig abstützenden, ein Stützkorngefüge ausbildenden Blähglaspartikeln bildet, wobei im wesentlichen in den Zwickeln bzw. in den Freiräumen zwischen den Blähglaspartikeln (2) eine Matrix (5) aus Perlitkörnern (3), erhärtetem Zementstein (4) und Luftporen angeordnet ist.

16. Leichtmauerfestmörtel nach Anspruch 15,
**dadurch gekennzeichnet,**
**daß** die Zwickel bzw. Freiräume zwischen den Blähglaspartikeln (2) vollständig mit der Matrix (5) ausgefüllt sind.

17. Leichtmauerfestmörtel nach Anspruch 15,
**dadurch gekennzeichnet,**
**daß** die Menge des Zements und des zugefügten Wassers derart bemessen ist, daß sich in den Berührungsbereichen der Leichtzuschlagstoffkörner Zementsteinbrücken ausbilden, wobei die Zwickel bzw. Freiräume zwischen den Leichtzuschlagstoffkörnern unausgefüllt verbleiben.

18. Leichtmauerfestmörtel nach einem der Ansprüche 15 bis 17,
**dadurch gekennzeichnet,**
**daß** das Mischungsverhältnis Perlit zu Blähglas 1,7:1 bis 2,43:1 beträgt.

19. Leichtmauermörtel nach einem der Ansprüche 15 bis 18,
**dadurch gekennzeichnet,**
**daß** der Perlit 48 Vol-% Wasserporen und 52 Vol-% Luftporen aufweist.

20. Leichtmauerfestmörtel nach einem der Ansprüche 15 bis 19,
**dadurch gekennzeichnet,**
**daß** der Mörtel eine Rohdichte von ≤ 600 kg/m³ aufweist.

21. Leichtmauerfestmörtel nach einem der Ansprüche 15 bis 20,
**dadurch gekennzeichnet,**
**daß** der Mörtel 15-30 Vol-% Luftporen aufweist.

22. Verwendung eines Leichtmauernaßmörtels hergestellt aus einer Trockenmörtelmischung nach einem der Ansprüche 1 bis 14 zum Vermauern von wärmedämmenden Steinen, insbesondere von Hohlblocksteinen aus Leichtbeton oder Vollblocksteine und Vollsteinen aus Leichtbeton.

23. Verwendung eines Leichtmauernaßmörtels hergestellt aus einer Trockenmörtelmischung nach einem der Ansprüche 1 bis 14 als Wärmedämmputz.

24. Verwendung eines Leichtmauernaßmörtels, hergestellt aus einer Trockenmörtelmischung nach einem der Ansprüche 1 bis 14 zur Herstellung von Leichtbetonformteilen.

## Claims

1. Dry mortar mix for producing a wet lightweight masonry mortar, which consists essentially of cement, air pore formers and, as selected lightweight aggregates, perlite and foamed glass, **characterized in that** the perlite has a bulk density of from 45 to 85 kg/m³ and a particle size of from 0 to 2 mm and the foamed glass has a bulk density of from 170 to 220 kg/m³ and a particle size of from 2 to 4 mm and from 11 to 15% by mass of perlite and from 15 to 30% by mass of foamed glass are present, based on the total mass of the dry mix.

2. Dry mortar mix according to Claim 1, **characterized in that** less than 0.0008% by mass of air pore formers are present.

3. Dry mortar mix according to Claim 1 and/or 2, **characterized in that** less than 0.09% by mass of cellulose ethers are present.

4. Dry mortar mix according to any of the preceding claims, **characterized in that** from 58 to 72% by mass of cement are present.

5. Dry mortar mix according to Claim 4, **characterized in that** the cement is a Portland cement.

6. Dry mortar mix according to any of the preceding claims, **characterized in that** the mixing ratio of perlite to foamed glass is from 1.7:1 to 2.43:1.

7. Dry mortar mix according to any of the preceding claims, **characterized in that** the perlite has 48% by volume of water pores and 52% by volume of air pores.

8. Dry mortar mix according to any of the preceding claims, **characterized in that** the lightweight masonry mortar contains agents for improving the processibility.

9. Dry mortar mix according to any of the preceding claims, **characterized in that** the lightweight masonry mortar contains agents for increasing the water retention.

10. Dry mortar mix according to any of the preceding claims, **characterized in that** the lightweight masonry mortar contains hydrophobicizing agents.

11. Dry mortar mix according to any of the preceding claims, **characterized in that** the lightweight masonry mortar contains setting retarders.

12. Dry mortar mix according to any of the preceding claims, **characterized in that** the lightweight masonry mortar contains curing accelerators.

13. Dry mortar mix according to any of the preceding claims, **characterized in that** the lightweight masonry mortar contains fluidizers.

14. Dry mortar mix according to any of the preceding claims, **characterized in that** the lightweight masonry mortar contains adhesion promoters.

15. Solid lightweight masonry mortar, in particular one produced using a dry mortar mix according to any of Claims 1 to 14 and water, which comprises hardened cement, air pores and, as selected lightweight aggregates, perlite and foamed glass, **characterized in that** the perlite has a bulk density of from 45 to 85 kg/m³ and a particle size of from 0 to 2 mm and the foamed glass has a bulk density of from 170 to 220 kg/m³ and a particle size of from 2 to 4 mm and from 11 to 15% by mass of perlite and from 15 to 30% by mass of foamed glass are present, based on the total mass of the dry mix, where the foamed glass particles (2) form a three-dimensional array of adjacent, mutually supporting foamed glass particles which form a supporting grain structure and a matrix (5) comprising perlite grains (3), hardened cement (4) and air pores which is located essentially at the triple points or in the free spaces between the foamed glass particles (2).

16. Solid lightweight masonry mortar according to Claim 15, **characterized in that** the triple points or free spaces between the foamed glass particles (2) are completely filled by the matrix (5).

17. Solid lightweight masonry mortar according to Claim 15, **characterized in that** the amount of cement employed and the amount of water added are such that hardened cement bridges are formed in the regions of contact between the lightweight aggregate grains and the triple points or free spaces between the lightweight aggregate grains remain unfilled.

18. Solid lightweight masonry mortar according to any of Claims 15 to 17, **characterized in that** the mixing ratio of perlite to foamed glass is from 1.7:1 to 2.43:1.

19. Lightweight masonry mortar according to any of Claims 15 to 18, **characterized in that** the perlite has 48% by volume of water pores and 52% by volume of air pores.

20. Solid lightweight masonry mortar according to any of Claims 15 to 19, **characterized in that** the mortar has a bulk density of ≤ 600 kg/m³.

21. Solid lightweight masonry mortar according to any of Claims 15 to 20, **characterized in that** the mortar has 15-30% by volume of air pores.

22. Use of a wet lightweight masonry mortar prepared from a dry mortar mix according to any of Claims 1 to 14 for laying thermally insulating bricks, in particular hollow blocks of lightweight concrete or solid blocks and solid bricks of lightweight concrete.

23. Use of a wet lightweight masonry mortar prepared from a dry mortar mix according to any of Claims 1 to 14 as thermally insulating render.

24. Use of a wet lightweight masonry mortar prepared from a dry mortar mix according to any of Claims 1 to 14 for producing lightweight concrete mouldings.

## Revendications

1. Mélange de mortier sec pour fabriquer un mortier humide pour maçonnerie légère, contenant essentiellement du ciment, des entraîneurs d'air, et aussi, en tant que granulats légers sélectionnés, de la perlite et du verre soufflé, **caractérisé en ce que** la perlite a une masse volumique apparente de 45 à 85 kg/m³ et une granulométrie de 0 à 2 mm, et le verre soufflé a une masse volumique apparente de 170 à 220 kg/m³ et une granulométrie de 2 à 4 mm, et que l'on a présents une quantité de perlite de 11 à 15 % en masse et une quantité de verre soufflé de 15 à 30 % en masse par rapport à la masse totale du mélange sec.

2. Mélange de mortier sec selon la revendication 1, **caractérisé en ce qu'**il contient moins de 0,0008 % en masse d'entraîneurs d'air.

3. Mélange de mortier sec selon la revendication 1 et/ou 2, **caractérisé en ce qu'**il contient moins de 0,09 % en masse d'éther de cellulose.

4. Mélange de mortier sec selon l'une des revendications précédentes, **caractérisé en ce qu'**il contient de 58 à 72 % en masse de ciment.

5. Mélange de mortier sec selon la revendication 4, **caractérisé en ce que** le ciment est un ciment Portland.

6. Mélange de mortier sec selon l'une des revendications précédentes, **caractérisé en ce que** le rapport de mélange de la perlite au verre soufflé est de 1,7:1 à 2,43:1.

7. Mélange de mortier sec selon l'une des revendications précédentes, **caractérisé en ce que** la perlite contient 48 % en volume de pores d'eau et 52 % en volume de pores d'air.

8. Mélange de mortier sec selon l'une des revendications précédentes, **caractérisé en ce que** le mortier contient des agents destinés à améliorer la maniabilité.

9. Mélange de mortier sec selon l'une des revendications précédentes, **caractérisé en ce que** le mortier pour maçonnerie légère contient des agents pour augmenter la rétention d'eau.

10. Mélange de mortier sec selon l'une des revendications précédentes, **caractérisé en ce que** le mortier pour maçonnerie légère contient des hydrofuges.

11. Mélange de mortier sec selon l'une des revendications précédentes, **caractérisé en ce que** le mortier pour maçonnerie légère contient des retardateurs de prise.

12. Mélange de mortier sec selon l'une des revendications précédentes, **caractérisé en ce que** le mortier pour maçonnerie légère contient des accélérateurs de durcissement.

13. Mélange de mortier sec selon l'une des revendications précédentes, **caractérisé en ce que** le mortier pour maçonnerie légère contient des agents d'écoulement.

14. Mélange de mortier sec selon l'une des revendications précédentes, **caractérisé en ce que** le mortier pour maçonnerie légère contient des promoteurs d'adhérence.

15. Mortier durci pour maçonnerie légère, en particulier par utilisation d'un mélange de mortier sec selon l'une des revendications 1 à 14, ainsi que d'eau, contenant de la pâte de ciment durcie, des pores d'air et aussi, en tant que granulats légers sélectionnés, de la perlite et du verre soufflé, **caractérisé en ce que** la perlite présente une masse volumique apparente de 45 à 85 kg/m³ et une granulométrie de 0 à 2 mm, et le verre soufflé présente une masse volumique apparente de 170 à 220 kg/m³ et une granulométrie de 2 à 4 mm, la perlite étant présente en une quantité de 11 à 15 % en masse et le verre soufflé étant présent en une quantité de 15 à 30% en masse par rapport à la masse totale du mélange sec, les particules de verre soufflé (2) formant un arrangement tridimensionnel de particules de verre soufflé, se soutenant l'une l'autre, formant une texture de grains de soutènement, une matrice (5) constituée de grains de perlite (3), de pâte de ciment durcie (4) et de pores d'air, étant disposée pour l'essentiel dans les écoinçons ou dans les espaces libres se trouvant entre les particules de verre soufflé (2).

16. Mortier durci pour maçonnerie légère selon la revendication 15,**caractérisé en ce que** les écoinçons ou les espaces libres entre les particules de verre soufflé (2) sont entièrement remplis par la matrice (5).

17. Mortier durci pour maçonnerie légère selon la revendication 15, **caractérisé en ce que** la quantité du ciment et de l'eau ajoutée est définie de telle sorte qu'il se forme des ponts de pâte de ciment durcie dans les zones de contact des grains du granulat léger, les écoinçons ou les espaces libres entre les grains du granulat léger restant non remplis.

18. Mortier durci pour maçonnerie légère selon l'une des revendications 15 à 17, **caractérisé en ce que** le rapport de mélange de la perlite au verre soufflé est de 1,7:1 à2,43:1.

19. Mortier durci pour maçonnerie légère selon l'une des revendications 15 à 18, **caractérisé en ce que** la perlite présente 48 % en volume de pores d'eau et 52 % en volume de pores d'air.

20. Mortier durci pour maçonnerie légère selon l'une des revendications 15 à 19, **caractérisé en ce que** le mortier a une masse volumique apparente inférieure ou égale à 600 kg/m³.

21. Mortier durci pour maçonnerie légère selon l'une des revendications 15 à 20, **caractérisé en ce que** le mortier présente de 15 à 30 % en volume de pores d'air.

22. Utilisation d'un mortier humide pour maçonnerie légère, fabriqué à partir d'un mélange de mortier sec selon l'une des revendications 1 à 14, pour maçonner des pierres calorifuges, en particulier des agglomérés creux de remplissage en béton léger ou des blocs pleins et des parpaings en béton léger.

23. Utilisation d'un mortier humide pour maçonnerie légère, fabriqué à partir d'un mélange de mortier sec selon l'une des revendications 1 à 14, en tant qu'enduit isolant thermique.

24. Utilisation d'un mortier humide pour maçonnerie légère, fabriqué à partir d'un mélange de mortier sec selon l'une des revendications 1 à 14, pour fabriquer des pièces moulées en béton léger.
